# EUROPÄISCHE PATENTSCHRIFT

(11) **EP 1 790 682 B1**
(45) Veröffentlichungstag und Bekanntmachung des Hinweises auf die Patenterteilung: **10.09.2008**
(21) Anmeldenummer: 06023502.5
(22) Anmeldetag: 11.11.2006
(51) Int. Cl.: C08J 9/00, C08F 283/00

(54) **Verwendung von gepfropften Polyether-Copolymerisaten zur Stabilisierung von Polyurethan-Schaumstoffen**
Use of grafted polyether copolymers as stabilizers in polyurethane foams
Utilisation des copolymères de polyether greffes comme stabilisateur en mousse de polyuréthanne

(30) Priorität: 25.11.2005 DE 102005056246
(43) Veröffentlichungstag der Anmeldung: 30.05.2007
(73) Patentinhaber: Evonik Goldschmidt GmbH, 45127 Essen (DE)
(72) Erfinder: Eilbracht, Christian, Dr., 44627 Herne (DE); Esselborn, Jutta, 45147 Essen (DE); Herrwerth, Sascha, Dr., 45128 Essen (DE); Schwab, Peter, Dr., 45127 Essen (DE)

(56) Entgegenhaltungen:
- EP-A2- 0 301 307
- EP-A2- 0 409 035
- WO-A-01/85822
- US-A- 4 529 745

## Beschreibung

Die Erfindung betrifft Schaumstabilisatoren, welche frei von Siliziumatomen sind und ihre Verwendung zur Herstellung von Polyurethan- und/oder Polyisocyanuratschäumen. Polyurethanhartschäume werden in vielfältigen Anwendungen unter anderem zur thermischen Isolierung, zur Energieabsorption und zur Schallabsorption genutzt. Die Eigenschaften des gebildeten Schaums hängen in besonderem Maße von der Struktur und der chemischen Zusammensetzung des verwendeten Schaumstabilisators ab. Schaumstabilisatoren werden bei der technischen Herstellung von Polyurethanschäumen als Prozesshilfsmittel verwendet. Sie emulgieren die verwendeten Rohstoffe, stabilisieren den Schaumstoff während des Herstellungsprozesses und ermöglichen die Ausbildung eines homogenen Schaumstoffes mit gleichmäßiger Porenstruktur, gewünschter Zellfeinheit und Offenzelligkeit. Als Schaumstabilisatoren werden im Allgemeinen Polysiloxan-Polyoxyalkylen-Blockmischpolymerisate verwendet. Diese Stabilisatoren haben hohe Wirksamkeit und lassen sich durch geeignete Auswahl der Struktur und der Zusammensetzung dem Verschäumungssystem und dem Verschäumungsverfahren anpassen. Der Siloxangehalt dieser Blockmischpolymerisate führt allerdings in Polyurethanschaumstoffen zu einer deutlichen Verschlechterung des Brandverhaltens durch erhöhte Entflammbarkeit. Ferner enthalten diese siliconbasierten Stabilisatoren jedoch aufgrund der Herstellungsweise stets einen erheblichen Anteil an flüchtigen, zyklischen und niedermolekularen linearen Siloxanen, die bei der späteren Anwendung des Schaumes unerwünschte Wirkungen wie einen signifikanten Beitrag zur Emission ("Fogging" - "VOC") zeigen können. Des Weiteren wurde beobachtet, dass die Oberflächen der erhaltenen Schaumstoffe bei Verwendung siliziumorganischer Stabilisatoren schlecht benetzbar sind, wodurch nachfolgende Oberflächenbehandlungen wie etwa eine Lackierung und das Auftragen mehrerer Schaumstofflagen erschwert werden.

Man hat deshalb versucht, siliziumfreie Stabilisatoren herzustellen, die diese Nachteile nicht aufweisen. Si-freie Schaumstabilisatoren wurden bereits mehrfach in der Patentliteratur erwähnt. Neben einfachen Tensiden, z. B. alkoxylierten Derivaten des Nonylphenols (US-A-5 236 961), alkoxylierten Fettalkoholen (EP-A-0 343 463), Fettsäureestern und -amiden (DE-A-195 213 51), wurden auch Polyetherole beschrieben, deren Wirksamkeit auf dem Vorhandensein von Butylenglykol beruhen soll (WO-A-95/16721). Als Starter werden OH-Verbindungen verschiedener Funktionalität, aber auch Amine (Ethylendiamin, Ammoniak und Ethanolamin) genannt.

Ebenfalls Si-frei sind Stabilisatoren auf der Basis partiell oder vollständig fluorierter Verbindungen, wie z.B. in US-A-4 356 273 beschrieben.

In WO-A-97/14732 werden siliciumfreie PUR-Hartschäume beschrieben, die allerdings auf der Basis bereits bekannter siliciumfreier Schaumstabilisatoren hergestellt werden. In der DE-A-22 44 350 ist ein Verfahren zur Herstellung von siliciumfreien Stabilisatoren beschrieben, die durch radikalische Polymerisation von N-Vinylpyrrolidon, N-Vinylpyrrolidon und Dibutylmaleat oder N-Vinylpyrrolidon, Dibutylmaleat und Vinylacetat in polyfunktionellen Polyether-Polyolen hergestellt wurden.

In der DE-A-25 00 017 und der US-4 091 030 werden siliciumfreie Stabilisatoren beschrieben, die durch radikalische Polymerisation von cyclischen, stickstoffhaltigen Monomeren (N-Vinylamiden) und einem Ester einer ungesättigten Dicarbonsäure in polyfunktionellen Polyetherpolyolen hergestellt werden.

Siliciumfreie Schaumstabilisatoren des Standes der Technik zeigen bislang allerdings noch verbesserungswürdiges Emulsionsverhalten, insbesondere was die Gleichmäßigkeit der gebildeten Zellstrukturen angeht. Der vorliegenden Erfindung lag daher die Aufgabe zugrunde, Schaumstabilisatoren für PU- und/oder PI-Schäume bereitzustellen, die bei möglichst feinzelliger gleichmäßiger Struktur einerseits eine geringe Wärmeleitfähigkeit und andererseits einen hohen Brandschutz aufweisen und die mit den Emissionen siliconhaltiger Schäume verbundenen Nachteile vermeiden.

Die Aufgabe wird erfindungsgemäß gelöst durch die Verwendung von im Wesentlichen siliciumfreien Polymerisaten, erhältlich durch radikalische Pfropf-Polymerisation von bis zu 50 Gewichtsteilen wenigstens eines ethylenisch ungesättigten Monomeren (A) enthaltend Styrol oder Styrol-Derivate in Gegenwart von mindestens 50 Gewichtsteilen wenigstens eines Polyethers (B), als Stabilisatoren zur Herstellung von PU-Schaumstoffen.

Bevorzugt wird die radikalische Pfropf-Polymerisation mit 2 bis 50 Gewichtsteilen, insbesondere 5 bis 30 Gewichts-%, bezogen auf die Gesamtmenge der Ausgangsstoffe, an Monomeren A und 50 bis 98 Gewichtsteilen, insbesondere 70 bis 95 Gewichts-%, bezogen auf die Gesamtmenge an Ausgangsstoffen, an Polyether B durchgeführt.

Die einzelnen Komponenten der gepfropften Polyether jeweils für sich, also das polymerisierte Monomer A und der Polyether B, wirken nicht im erfindungsgemäßen Ausmaß stabilisierend auf PU/PI-Schäume. Die Erfindung beruht daher wesentlich auf dem überraschend gefundenen Synergismus der erfindungsgemäßen Verwendung.

Die Monomeren A können unter Verwendung konventioneller synthetischer Methoden homo- oder copolymerisiert werden. Beispielsweise können dies Lösungspolymerisation, Emulsionspolymerisation, umgekehrte Emulsionspolymerisation, Suspensionspolymerisation, umgekehrte Suspensionspolymerisation oder Fällungspolymerisation sein, ohne dass die verwendbaren Methoden darauf beschränkt sind. Bei der Lösungspolymerisation können Wasser und übliche organische Lösungsmittel sowie die erfindungsgemäßen Etherderivate B selbst als Lösungsmittel verwendet werden. Das letztgenannte Verfahren wird jedoch bevorzugt.

Als Monomere A können grundsätzlich Stoffe eingesetzt werden, die mit einer durch freie Radikale initiierten Reaktion polymerisiert werden können und vom Styrol- oder Styrol-Derivat Typ sind.

Bevorzugt im Sinne der Erfindung ist, wenn Monomere AStyrol oder dessen Derivate gemeinsam mit Monomeren aus der Gruppe der Derivate der Acrylsäure und Methacrylsäure, Vinylether, Vinylalkohole, Vinylester verwendet werden.

Geeignete ungesättigte Monomere A Außer Styrol und dessen Derivate sind beispielsweise und bevorzugt Kohlenwasserstoffe mit mindestens einer Kohlenstoff-Kohlenstoff Doppelbindung, insbesondere wenn Monomere A enthalten sind, die ausgewählt sind aus den Derivaten der Acrylsäure und Methacrylsäure der allgemeinen Formel I

R¹O-C(O)CR²=CHR³ Formel I,

wobei
- R¹: einen C₁-C₄₀-linearen, C₃-C₄₀-verzweigtkettigen, aromatischen oder C₃-C₄₀-carbocyclischen, gegebenenfalls ein- oder mehrfach hydroxysubstituierten Kohlenwasserstoffrest, bezeichnet, insbesondere abgeleitet von ein- oder mehrfachfunktionellen Alkoholen mit 2 bis etwa 10 Hydroxylgruppen wie Ethylenglycol, Hexylenglycol, Glycerin, und 1,2,6-Hexantriol, von Alkoholethern wie Methoxyethanol und Ethoxyethanol oder Polyethylenglykolen,
- R² und R³: unabhängig voneinander ausgewählt sind aus der Gruppe bestehend aus: -H, C₁-C₈-linear- oder verzweigtkettige Alkylketten, der Methoxy-, Ethoxy-, 2-Hydroxyethoxy-, 2-Methoxyethoxy- und 2-Ethoxyethylgruppe.

Weitere geeignete Monomere A sind Vinylether, Vinylalkohole, sowie Mischungen dieser Monomere.

Bevorzugt unter den Styrolmonomeren sind solche, die ausgewählt sind aus der Gruppe bestehend aus Styrol, Methylstyrol, tert.-Butylstyrol und anderen Styrolderivaten sowie aus Mischungen dieser Monomere.

Ebenfalls besonders bevorzugt sind ungesättigte Monomere A enthalten, die ausgewählt sind aus der Gruppe bestehend aus Vinyl- und Allylestern von C₁-C₄₀-linearen, C₃-C₄₀-verzweigtkettigen oder C₃-C₄₀-carbocyclischen Carbonsäuren, insbesondere Vinylacetat, Vinylpropionat, Vinylneononanoat, Vinylneoundekanoat oder *t*-Butyl-benzoesäure-vinylester und Vinyl- oder Allylhalogeniden sowie Mischungen dieser Monomere.

Besonders geeignete Monomere sind Methylacrylat, Ethylacrylat, Propylacrylat, n-Butylacrylat, iso-Butylacrylat, t-Butylacrylat, 2-Ethylhexylacrylat, Decylacrylat, Benzylacrylat, Benzylmethacrylat, Methylmethacrylat, Ethylmethacrylat, Propylmethacrylat, n-Butylmethacrylat, iso-Butylmethacrylat, t-Butylmethacrylat, 2-Ethylhexylmethacrylat, Decylmethacrylat, Methylethacrylat, Ethylethacrylat, n-Butylethacrylat, iso-Butylethacrylat, t-Butylethacrylat, 2-Ethylhexylethacrylat, Decylethacrylat, 2,3-Dihydroxypropylacrylat, 2,3-Dihydroxypropylmethacrylat, 2-Hydroxyethylacrylat, Hydroxypropylacrylate, 2-Hydroxyethylmethacrylat, 2-Hydroxyethylethacrylat, 2-Methoxyethylacrylat, 2-Methoxyethylmethacrylat, 2-Methoxyethylethacrylat, 2-Ethoxyethylmethacrylat, 2-Ethoxyethylethacrylat, Hydroxypropylmethacrylate, Glycerylmonoacrylat, Glycerylmonomethacrylat, Polyalkylenglykol(meth)-acrylate, ungesättigte Sulfonsäuren, Vinylether (zum Beispiel:Methyl-, Ethyl-, Butyl-, oder Dodecylvinylether), Methylvinylketon, Vinylfuran, Styrol, alpha-Methylstyrol, meta-Methylstyrol, para-Methylstyrol, Methylstyrol-Isomerengemisch, tert.-Butylstyrol, Vinyltoluol, Styrolsulfonat und Mischungen daraus.

Im Sinne der Erfindung können die genannten Beispiele für Monomere A beispielsweise 2 bis 50 Gew.-%, oder bevorzugt 5 bis 30 Gew.-% bezogen auf die Gesamtmenge ausmachen.

Zusätzlich zu den oben genannten Monomeren können als Monomere so genannte Makromonomere wie zum Beispiel etherhaltige Makromonomere mit ein oder mehreren radikalisch polymerisierbaren Gruppen oder Alkyloxazolinmakromonomere eingesetzt werden, wie sie zum Beispiel in der EP-A-408 311 beschrieben sind.

Des Weiteren können fluorhaltige Monomere, wie sie beispielsweise in der EP-B-558 423 beschrieben sind, als vernetzend wirkende oder das Molekulargewicht regelnde Verbindungen in Kombination oder alleine eingesetzt werden.

Als Regler können die üblichen dem Fachmann bekannten Verbindungen wie zum Beispiel Schwefelverbindungen (z.B.: Mercaptoethanol, 2-Ethylhexylthioglykolat, Thioglykolsäure oder Dodecylmercaptan) sowie Tribromchlormethan oder andere Verbindungen, die regelnd auf das Molekulargewicht der erhaltenen Polymerisate wirken, verwendet werden. Es können gegebenenfalls auch thiolgruppenhaltige Etherverbindungen eingesetzt werden. Bevorzugt werden aber etherfreie Regler eingesetzt oder die Synthesebedingungen so eingestellt, dass keine Regler verwendet werden müssen.

Als vernetzende Monomere können Verbindungen mit mindestens zwei ethylenisch ungesättigten Doppelbindungen eingesetzt werden wie zum Beispiel Ester von ethylenisch ungesättigten Carbonsäuren, wie Acrylsäure oder Methacrylsäure und mehrwertigen Alkoholen, Ether von mindestens zweiwertigen Alkoholen wie zum Beispiel Vinylether oder Allylether. Außerdem geeignet sind geradkettige oder verzweigte, lineare oder cyclische aliphatische oder aromatische Kohlenwasserstoffe, die aber mindestens zwei Doppelbindungen tragen, welche bei den aliphatischen Kohlenwasserstoffen nicht konjugiert sein dürfen. Weitere geeignete Vernetzer sind Divinyldioxan, Tetraallylsilan oder Tetravinylsilan.

Besonders bevorzugte Vernetzer sind beispielsweise Umsetzungsprodukte mehrwertiger Alkohole mit Acrylsäure oder Methacrylsäure, Methacrylsäureester und Acrylsäureester von Polyalkylenoxiden oder mehrwertigen Alkoholen die mit Ethylenoxid und/oder Propylenoxid und/oder Epichlorhydrin umgesetzt worden sind. Wie dem Fachmann geläufig ist, können aber die Molekulargewichte so eingestellt werden, dass keine Vernetzer notwendig sind.

Die Pfropfpolymerisation wird eingeleitet durch radikalische Initiatoren wie organische Peroxide, z.B. Dibenzoylperoxid, Diacetylperoxid, Dilauroylperoxid, durch Azo-Körper, wie z. B. Azobisisobutyronitril, oder durch irgendeinen anderen Stoff, der thermisch bedingt Radikale freisetzt. Auch Redoxsysteme, wie z. B. Dibenzoylperoxid/Benzoin können Anwendung finden. Ferner kommt auch eine Aktivierung durch Bestrahlung in Betracht.

Die genannten Initiatoren werden bevorzugt in Mengen von etwa 0,01 bis 10 Gewichtsprozent, vorzugsweise von 0,1 bis 3 % bezogen auf die Gesamtmenge aus Polyether und Monomere eingesetzt.

Eine Vielzahl geeigneter Polyetherderivate B ist verfügbar. Besonders geeignete Polyetherderivate B sind Polyoxyalkylen-Copolymere der allgemeinen Formel II

(F)_{q}(O(C₂H_{4-d}R'_{d}O)ₘ(CₓH₂ₓO)ᵣZ)_{w}

mit den Bedeutungen
- d: 1 bis 3,
- m: > 1,
- q: 0 oder 1,
- x: 2 bis 10,
- r: > 1,
- w: 1 bis 4,
- F: ein geradkettiger oder verzeigter Kohlenwasserstoffrest,
- R': ein Wasserstoffatom oder ein einwertiger Kohlenwasserstoffrest mit 1 bis 18 C-Atomen,
- Z: Z ein Wasserstoffatom oder ein einwertiger organischer Rest, insbesondere ein Alkyl, Alkyl- oder Arylester.

Die in der Formel II beschriebenen Polyether werden durch Umsetzung von Wasser oder eines Startalkohols, der bevorzugt ein Alkoholamin, Alkohol oder Amin ist, durch Anlagerung von Monomeren gewonnen. Startalkohole können z.B. 2-Aminoethanol, Ethylenglykol, Propylenglykol, Glycerin, Oligo- und Polyglycerine, 1,3-Dihydroxypropan, 1,4-Dihydroxybutan, 1,6-Dihydroxyhexan, 1,2,4-Trihydroxybutan, 1,2,6-Trihydroxyhexan, 1,1,1-Trimethylolpropan, Pentaerytritol, Oligomere des Pentaerytritols, Polycaprolacton, Xylitol, Arabitol, Sorbitol, Mannitol, Ethylendiamin, Ammoniak, 1,2,3,4-Tetrahydroxybutan, Rizinusöl oder Fruktose sein.

Als Monomere geeignet sind Ethylenoxid, Propylenoxid, Verbindungen aus der Gruppe Tetrahydrofuran, 1,2-Epoxybutan (n-Butylenoxid), 2,3-Epoxybutan (iso-Butylenoxid), sowie Dodecyloxid. Dabei kann die Verteilung der Monomere beliebig gewählt sein, so dass beispielsweise Blöcke enthalten sein können. Außerdem ist auch eine Mischung der Monomeren einsetzbar, so dass Polyether erhalten werden, in denen die Einheiten in statistischer Verteilung vorliegen.

Zur Anwendung kommen dem Fachmann bekannte Pfropfverfahren. Die erfindungsgemäß erhaltenen Produkte wurden anwendungstechnischen Ausprüfungen in einer Polyurethanschaumformulierung unterzogen. Verglichen wurden die erfindungsgemäß hergestellten Produkte dabei mit kommerziell verwendeten Schaumstabilisatoren auf Basis von Polyether-blockcopolymeren.

Besonders bevorzugt finden die beschriebenen gepfropften Polyether-Copolymerisate Verwendung als Stabilisator für Polyurethanhartschäume in Konzentrationen von 0,01 bis 20 %, ganz besonders bevorzugt in Konzentrationen von 0,5 bis 5 %, bezogen auf die Gesamtmenge der Ausgangsstoffe der Pfropfungsreaktion.

Der besondere Vorteil der Erfindung zeigt sich in der Verbesserung des Flammschutzes und/oder Verringerung der Wärmeleitfähigkeit des Polyurethanschaumes.

### Beispiele:

Nachfolgende Beispiele sollen zur Verdeutlichung der Erfindung dienen, sie stellen jedoch keinerlei Einschränkung dar.

### Vergleichsbeispiel 1 (nicht erfindungsgemäß):

Ethylenoxid-/propylenoxidhaltiges Blockcopolymer (MW ≈ 5.400, 40 % EO-Anteil), hergestellt nach dem Stand der Technik. Es wurden 45 g n-Butandiol und 7 g Kaliummethanolat in einem Druckreaktor vorgelegt und auf 100 °C aufgeheizt. Anschließend wurden 3.240 g Propylenoxid und danach 2.160 g Ethylenoxid über mehrere Stunden zudosiert und bei 100 °C eine Stunde nachreagiert. Nach Abkühlen auf 80 °C wurde das Reaktionsgemisch neutralisiert und abgefüllt.

### Vergleichsbeispiel 2 (nicht erfindungsgemäß):

Ethylenoxid-/propylenoxidhaltiges Blockcopolymer (MW = 6.500, 50 % EO-Anteil), hergestellt nach dem Stand der Technik. Es wurden 1 mol H₂O und KOH in einem Druckreaktor vorgelegt und auf 100 °C aufgeheizt. Anschließend werden 3.240 g Propylenoxid über mehrere Stunden und nach einer Nachreaktionszeit von 1 h 2.160 g Ethylenoxid über mehrere Stunden zudosiert. Nach einer weiteren Nachreaktionszeit von 1 h bei 100 °C und Abkühlen auf 80 °C wurde das Reaktionsgemisch neutralisiert und abgefüllt.

### Vergleichsbeispiel 3 (nicht erfindungsgemäß):

Ethylenoxid-/butylenoxidhaltiges Blockcopolymer (MW = 6.100, 40 % EO-Anteil), analog Vergleichsbeispiel 1 hergestellt.

### Erfindungsgemäße Beispiele:

### Beispiel 1: (erfindungsgemäss)

Umsetzung von einem ethylenoxid-/propylenoxidhaltigen Copolymer des Vergleichsbeispiels 1 mit Styrol unter Verwendung von Trigonox 117 als Initiator.

100 g des ethylenoxid-/propylenoxidhaltigen Copolymers wurden in einem Vierhalskolben, ausgestattet mit Rührer, Intensivkühler, Thermometer und Tropftrichter, unter Stickstoffatmosphäre auf 140 °C aufgeheizt. Bei Erreichen der Temperatur wurden 30 g Styrol und 1,8 g Trigonox 117 innerhalb von 20 Minuten zugetropft, wobei eine exotherme Reaktion beobachtet wurde. Die Reaktionsmischung wurde daraufhin eine Stunde bei 150 °C gehalten. Anschließend wurden unter Verwendung einer Destillationsbrücke Restmonomere bei 145 °C und Ölpumpenvakuum abdestilliert. Man erhielt ein gelbliches, homogenes Produkt.

### Beispiel 2: (Vergleichsbeispiel)

Umsetzung von einem ethylenoxid-/propylenoxidhaltigen Copolymer des Vergleichsbeispiels 1 mit Methylmethacrylat unter Verwendung von Trigonox 117 als Initiator.

100 g des ethylenoxid-/propylenoxidhaltigen Copolymers wurden in einem Vierhalskolben, ausgestattet mit Rührer, Intensivkühler, Thermometer und Tropftrichter unter Stickstoffatmosphäre auf 140 °C aufgeheizt. Bei Erreichen der Temperatur werden 20 g Methylmethacrylat und 1,8 g Trigonox 117 innerhalb von 20 Minuten zugetropft, wobei eine exotherme Reaktion beobachtet wurde. Die Reaktionsmischung wurde daraufhin eine Stunde bei 150 °C gehalten. Anschließend wurden unter Verwendung einer Destillationsbrücke Restmonomere bei 145 °C und Ölpumpenvakuum abdestilliert. Man erhielt ein gelbliches, homogenes Produkt.

### Beispiel 3: (Vergleichsbeispiel)

Umsetzung von einem ethylenoxid-/propylenoxidhaltigen Copolymer des Vergleichsbeispiels 1 mit Butylmethacrylat unter Verwendung von Trigonox 117 als Initiator.

100 g des ethylenoxid-/propylenoxidhaltigen Copolymers wurden in einem Vierhalskolben, ausgestattet mit Rührer, Intensivkühler, Thermometer und Tropftrichter unter Stickstoffatmosphäre auf 140 °C aufgeheizt. Bei Erreichen der Temperatur wurden 20 g Butylmethacrylat und 1,8 g Trigonox 117 innerhalb von 20 Minuten zugetropft, wobei eine exotherme Reaktion beobachtet wurde. Die Reaktionsmischung wurde daraufhin eine Stunde bei 150 °C gehalten. Anschließend wurden unter Verwendung einer Destillationsbrücke Restmonomere bei 145 °C und Ölpumpenvakuum abdestilliert. Man erhielt ein gelbliches, homogenes Produkt.

### Beispiel 4: (Vergleichsbeispiel)

Umsetzung von einem ethylenoxid-/propylenoxidhaltigen Copolymer des Vergleichsbeispiels 1 mit Cyclohexylmethacrylat unter Verwendung von Trigonox 117 als Initiator.

100 g des ethylenoxid-/propylenoxidhaltigen Copolymers wurden in einem Vierhalskolben, ausgestattet mit Rührer, Intensivkühler, Thermometer und Tropftrichter unter Stickstoffatmosphäre auf 140 °C aufgeheizt. Bei Erreichen der Temperatur wurden 20 g Cyclohexylmethacrylat und 1,8 g Trigonox 117 innerhalb von 20 Minuten zugetropft, wobei eine exotherme Reaktion beobachtet wurde. Die Reaktionsmischung wurde daraufhin eine Stunde bei 150 °C gehalten. Anschließend wurden unter Verwendung einer Destillationsbrücke Restmonomere bei 145 °C und Ölpumpenvakuum abdestilliert. Man erhielt ein gelbliches, homogenes Produkt.

### Beispiel 5: (Vergleichsbeispiel)

Umsetzung von einem ethylenoxid-/propylenoxidhaltigen Copolymer des Vergleichsbeispiels 2 mit Butylmethacrylat unter Verwendung von Trigonox 117 als Initiator.

100 g des ethylenoxid-/propylenoxidhaltigen Copolymers wurden in einem Vierhalskolben, ausgestattet mit Rührer, Intensivkühler, Thermometer und Tropftrichter unter Stickstoffatmosphäre auf 140 °C aufgeheizt. Bei Erreichen der Temperatur wurden 20 g Butylmethacrylat und 1,8 g Trigonox 117 innerhalb von 20 Minuten zugetropft, wobei eine exotherme Reaktion beobachtet wurde. Die Reaktionsmischung wurde daraufhin eine Stunde bei 150 °C gehalten. Anschließend wurden unter Verwendung einer Destillationsbrücke Restmonomere bei 145 °C und Ölpumpenvakuum abdestilliert. Man erhielt ein gelbliches, homogenes Produkt.

### Beispiel 6: (erfindungsgemäss)

Umsetzung von einem ethylenoxid-/butylenoxidhaltigen Copolymer des Vergleichsbeispiels 3 mit Styrol unter Verwendung von Trigonox 117 als Initiator.

100 g des ethylenoxid-/butylenoxidhaltigen Copolymers wurden in einem Vierhalskolben, ausgestattet mit Rührer, Intensivkühler, Thermometer und Tropftrichter unter Stickstoffatmosphäre auf 140 °C aufgeheizt. Bei Erreichen der Temperatur wurden 20 g Styrol und 1,8 g Trigonox 117 innerhalb von 20 Minuten zugetropft, wobei eine exotherme Reaktion beobachtet wurde. Die Reaktionsmischung wurde daraufhin eine Stunde bei 150 °C gehalten. Anschließend wurden unter Verwendung einer Destillationsbrücke Restmonomere bei 145 °C und Ölpumpenvakuum abdestilliert. Man erhielt ein gelbliches, homogenes Produkt.

### Beispiel 7: (erfindungsgemäss)

Umsetzung von einem ethylenoxid-/propylenoxidhaltigen Copolymer des Vergleichsbeispiels 2 mit Methylstyrol unter Verwendung von Trigonox 117 als Initiator.

100 g des ethylenoxid-/propylenoxidhaltigen Copolymers wurden in einem Vierhalskolben, ausgestattet mit Rührer, Intensivkühler, Thermometer und Tropftrichter unter Stickstoffatmosphäre auf 140 °C aufgeheizt. Bei Erreichen der Temperatur wurden 20 g Methylstyrol und 1,8 g Trigonox 117 innerhalb von 20 Minuten zugetropft, wobei eine exotherme Reaktion beobachtet wurde. Die Reaktionsmischung wurde daraufhin eine Stunde bei 150 °C gehalten. Anschließend wurden unter Verwendung einer Destillationsbrücke Restmonomere bei 145 °C und Ölpumpenvakuum abdestilliert. Man erhielt ein gelbliches, homogenes Produkt.

Für den folgenden Vergleich wurden Polyurethanhartschaumstoffe in einer 50 x 50 x 5 cm großen, auf 45 °C temperierten, verschließbaren metallischen Form durch eine Handverschäumung einer Polyurethanformulierung mit folgenden Bestandteilen produziert:

| | |
|---|---|
| 100,00 pphp | modifiziertes aromatisches Polyesterpolyol (230 mg KOH/g) |
| 3,00 pphp | KOSMOS^{®} 75 (Degussa) |
| 1,00 pphp | KOSMOS^{®} 33 (Degussa) |
| 2,50 pphp | TEGOAMIN^{®} DMEA (Degussa) |
| 0,70 pphp | Wasser |
| 2,00 pphp | Schaumstabilisator |
| 15,00 pphp | Tris(2-chloroisopropyl)phosphat |
| 17,00 pphp | n-Pentan |
| 194,50 pphp | Diphenylmethandiisocyanat, Isomere u. Homologe (Isocyanatgehalt: 31,5 %) |

Die erhaltenen Hartschaumstoffe wurden im Rahmen einer visuellen Beurteilung bezüglich der Oberflächenbeschaffenheit, Innenstörungen und Zellfeinheit untersucht. Weiterhin wurde die mittlere Wärmeleitfähigkeit (K-Faktor) durch Wärmeleitfähigkeitsmessung mit Hilfe einer Wärmeflussmessung in einem Temperaturgradienten (36 °C/10 °C) bestimmt.

Im Folgenden werden die Ergebnisse, die mit den erfindungsgemäßen Polyether-Coplymerisaten erzielt worden sind, mit denen von kommerziell verfügbaren siliziumfreien Emulgatoren verglichen.

| Stabilisator | Oberfächenstörungen - unten - | Oberfächenstörungen - oben - | Innenstörungen | Zellfeinheit | Wärmeleitfähigkeit [mW/mK] |
|---|---|---|---|---|---|
| Beispiel 1 | mittel | schwach | Mittel | sehr fein | 24,0 |
| Beispiel 2 | mittel | schwach | schwach | extrem fein | 23,6 |
| Beispiel 3 | schwach | schwach | Mittel | sehr fein | 24,1 |
| Beispiel 4 | mittel | schwach | schwach | sehr fein | 24,2 |
| Beispiel 5 | schwach | schwach | Mittel | sehr fein | 24,5 |
| Beispiel 6 | schwach | schwach | schwach | extrem fein | 23,1 |
| Beispiel 7 | mittel | schwach | schwach | extrem fein | 23,6 |
| Vergleichsbeispiel 1 | sehr stark | stark | stark | sehr fein | 25,2 |
| Vergleichsbeispiel 2 | sehr stark | stark | stark | fein | 25,7 |
| Vergleichsbeispiel 3 | mittel | schwach | mittel | sehr fein | 24,7 |

Wie aus der oben stehenden Tabelle ersichtlich wird, eignen sich die beanspruchten Verbindungen als Schaumstabilisatoren zur Herstellung von Hartschaumstoffen und sind im Gegensatz zu den schwächer stabilisierenden Polyethern der Vergleichsbeispiele durch wesentlich geringere Schaumstörungen geprägt. Die Beispiele 1 bis 7 verdeutlichen das hohe Stabilisierungspotential dieser organischen Stabilisatoren, das sich in einem geringeren Ausmaß an oberflächennahen Schaumstörungen und Innenstörungen der erhaltenen Probekörper ausdrückt. Weiterhin zeigen die Hartschaumstoffe dieser Beispiele in Relation zu den Vergleichbeispielen feinere Zellstrukturen, die zu signifikant verbesserten Wärmeleitfähigkeiten führen.

## Patentansprüche

1. Verwendung von im Wesentlichen siliciumfreien Polymerisaten, erhältlich durch radikalische Pfropf-Polymerisation von bis zu 50 Gewichtsteilen wenigstens eines ethylenisch ungesättigten Monomeren (A), ausgewählt aus Styrol oder Derivaten des Styrols, oder Mischungen dieser mit Derivaten der Acrylsäure oder Methacrylsäure, Vinylethern, Vinylalkoholen oder Vinylestern, in Gegenwart von mindestens 50 Gewichtsteilen wenigstens eines Polyethers (B), als Stabilisatoren zur Herstellung von PU-und/oder PI-Schaumstoffen.

2. Verwendung nach Anspruch 1, **dadurch gekennzeichnet, dass** Monomere A enthalten sind, die ausgewählt sind aus den Derivaten der Acrylsäure und Methacrylsäure der allgemeinen Formel I
R¹O-C(O)CR²=CHR³ Formel I,
wobei
R¹ einen C₁-C₄₀-linearen, C₃-C₄₀-verzweigtkettigen, aromatischen oder C₃-C₄₀-carbocyclischen, gegebenenfalls ein- oder mehrfach hydroxysubstituierten Kohlenwasserstoffrest, bezeichnet, insbesondere abgeleitet von ein- oder mehrfachfunktionellen Alkoholen mit 2 bis 10 Hydroxylgruppen wie Ethylenglycol, Hexylenglycol, Glycerin, und 1,2,6-Hexantriol, von Alkoholethern wie Methoxyethanol und Ethoxyethanol oder Polyethylenglykolen,
R² und R³ unabhängig voneinander ausgewählt sind aus der Gruppe bestehend aus: -H, C₁-C₈-linear- oder verzweigtkettige Alkylketten, der Methoxy-, Ethoxy-, 2-Hydroxyethoxy-, 2-Methoxyethoxy- und 2-Ethoxy-ethylgruppe.

3. Verwendung nach Anspruch 1 oder 2, **dadurch gekennzeichnet, dass** Monomere A enthalten sind, die ausgewählt sind aus der Gruppe bestehend aus Styrol, Methylstyrol, tert.-Butylstyrol und anderen Styrolderivaten sowie aus Mischungen dieser Monomere.

4. Verwendung nach einem der Ansprüche 1 bis 3, **dadurch gekennzeichnet, dass** Monomere A enthalten sind, die ausgewählt sind aus der Gruppe bestehend aus Vinyl- und Allylestern von C₁-C₄₀-linearen, C₃-C₄₀-verzweigtkettigen oder C₃-C₄₀-carbocyclischen Carbonsäuren, insbesondere Vinylacetat, Vinylpropionat, Vinylneononanoat, Vinylneoundekanoat oder *t*-Butyl-benzoesäure-vinylester und Vinyl- oder Allylhalogeniden sowie Mischungen dieser Monomere.

5. Verwendung von Polymerisaten gemäß einem der Ansprüche 1 bis 4, **dadurch gekennzeichnet, dass** die Polyetherkomponente B ein Polyoxyalkylen-Copolymer der allgemeinen Formel II
(F)_{q}(O(C₂H₄-_{d}R'_{d}O)ₘ(CₓH₂ₓO)ᵣZ)_{w}
ist, mit den Bedeutungen
d 1 bis 3,
m > 1,
q 0 oder 1,
x 2 bis 10,
r > 1,
w 1 bis 4,
F ein geradkettiger oder verzeigter Kohlenwasserstoffrest,
R' ein Wasserstoffatom oder ein einwertiger Kohlenwasserstoffrest mit 1 bis 18 C-Atomen,
Z ein Wasserstoffatom oder ein einwertiger organischer Rest, insbesondere ein Alkyl, Alkyl- oder Arylester.

6. Verwendung gemäß einem der Ansprüche 1 bis 5 als Stabilisator für Polyurethan- und/oder Polyisocyanurathartschäume in Konzentrationen von 0,01 bis 20 %.

7. Verwendung nach einem der Ansprüche 1 bis 6 zur Verbesserung des Flammschutzes und/oder Verringerung der Wärmeleitfähigkeit des Polyurethan- und/oder des Polyisocyanuratschaumes.

## Claims

1. Use of substantially silicon-free polymers, obtainable by free radical graft polymerization of up to 50 parts by weight of at least one ethylenically unsaturated monomer (A), selected from styrene or derivatives of styrene, or mixtures of these with derivatives of acrylic acid or methacrylic acid, vinyl ethers, vinyl alcohols or vinyl esters, in the presence of at least 50 parts by weight of at least one polyether (B), as stabilizers for the preparation of PU and/or PI foams.

2. Use according to Claim 1, **characterized in that** monomers A are present which are selected from the derivatives of acrylic acid and methacrylic acid of the general formula I
R¹O-C(O)CR²=CHR³ Formula I,
in which
R¹ is a C₁-C₄₀-linear, C₃-C₄₀-branched, aromatic or C₃-C₄₀-carbocyclic, optionally mono- or poly-hydroxyl-substituted hydrocarbon radical, in particular derived from mono-or polyfunctional alcohols having from 2 to 10 hydroxyl groups, such as ethylene glycol, hexylene glycol, glycerol and 1,2,6-hexanetriol, from alcohol ethers, such as methoxyethanol and ethoxyethanol, or from polyethylene glycols,
R² and R³ independently of one another, are selected from the group consisting of: -H, C₁-C₈-linear or branched alkyl chains and the methoxy, ethoxy, 2-hydroxyethoxy, 2-methoxyethoxy and 2-ethoxyethyl group.

3. Use according to Claim 1 or 2, **characterized in that** monomers A are present which are selected from the group consisting of styrene, methylstyrene, tertbutylstyrene and other styrene derivatives and from mixtures of these monomers.

4. Use according to any of Claims 1 to 3, **characterized in that** monomers A are present which are selected from the group consisting of vinyl and allyl esters of C₁-C₄₀-linear, C₃-C₄₀-branched or C₃-C₄₀-carbocyclic carboxylic acids, in particular vinyl acetate, vinyl propionate, vinyl neononanoate, vinyl neoundecanoate or vinyl tert-butylbenzoate, and vinyl or allyl halides and mixtures of these monomers.

5. The use of polymers according to any of Claims 1 to 4, **characterized in that** the polyether component B is a polyoxyalkylene copolymer of the general formula II
(F)_{q}(O(C₂H₄-_{d}R'_{d}O)ₘ(CₓH₂ₓO)ᵣZ)_{w}
having the meaning
d from 1 to 3,
m > 1,
q 0 or 1,
x from 2 to 10,
r > 1,
w from 1 to 4,
F a straight-chain or branched hydrocarbon radical,
R' a hydrogen atom or a monovalent hydrocarbon radical having 1 to 18 C atoms,
Z a hydrogen atom or a monovalent organic radical, in particular an alkyl or alkyl ester or aryl ester.

6. Use according to any of Claims 1 to 5 as a stabilizer for rigid polyurethane and/or polyisocyanurate foams in concentrations of from 0.01 to 20%.

7. Use according to any of Claims 1 to 6 for improving the flame retardance and/or reducing the thermal conductivity of the rigid polyurethane and/or polyisocyanurate foam.

## Revendications

1. Utilisation de polymères sensiblement exempts de silicium, pouvant être obtenus par polymérisation-greffage radicalaire d'au plus 50 parties en poids d'au moins un monomère à insaturation éthylénique (A), choisi parmi le styrène ou les dérivés de styrène ou les mélanges de ces derniers avec des dérivés d'acide acrylique ou d'acide méthacrylique, les éthers vinyliques, les alcools vinyliques ou les esters vinyliques, en présence d'au moins 50 parties en poids d'au moins un polyéther (B), en tant que stabilisateurs pour la fabrication de mousses de PU et/ou de PI.

2. Utilisation selon la revendication 1, **caractérisée en ce que** des monomères A présents sont choisis parmi les dérivés d'acide acrylique et d'acide méthacrylique de formule générale I
R¹O-C(O)CR²=CHR³ Formule I,
dans laquelle,
R¹ représente un radical hydrocarboné linéaire en C₁ à C₄₀, ramifié en C₃ à C₄₀, aromatique ou carbocyclique en C₃ à C₄₀, comportant éventuellement une ou plusieurs substitutions hydroxy, notamment dérivé d'alcools mono-ou polyfonctionnels comportant de 2 à 10 groupements hydroxy tels que l'éthylène glycol, l'hexylène glycol, la glycérine et le 1,2,6-hexanetriol, d'éthers d'alcools tels que le méthoxyéthanol et l'éthoxyéthanol ou les polyéthylène glycols,
R² et R³ sont choisis indépendamment l'un de l'autre dans le groupe constitué de : -H, les chaînes alkyles ramifiées ou linéaires en C₁-C₈, les groupements méthoxy, éthoxy, 2-hydroxyéthoxy, 2-méthoxyéthoxy et 2-éthoxyéthyle.

3. Utilisation selon la revendication 1 ou 2, **caractérisée en ce que** des monomères A présents sont choisis dans le groupe constitué du styrène, du méthylstyrène, du tert-butylstyrène et d'autres dérivés de styrène, ainsi que des mélanges de ces monomères.

4. Utilisation selon l'une quelconque des revendications 1 à 3, **caractérisée en ce que** des monomères A présents sont choisis dans le groupe constitué des esters vinyliques et allyliques d'acides carboxyliques linéaires en C₁ à C₄₀, ramifiés en C₃ à C₄₀ ou carbocycliques en C₃ à C₄₀, notamment l'acétate de vinyle, le propionate de vinyle, le néononanoate de vinyle, le néoundécanoate de vinyle ou l'ester vinylique de l'acide t-butyl-benzoïque et les halogénures de vinyle ou d'allyle, ainsi que des mélanges de ces monomères.

5. Utilisation de polymères selon l'une quelconque des revendications 1 à 4, **caractérisée en ce que** le composant polyéther B est un copolymère de polyoxyalkylène de formule générale II
(F)_{q}(O(C₂H₄-_{d}R'_{d}O)ₘ(CₓH₂ₓO)ᵣZ)_{w}
avec les significations
d 1 à 3,
m > 1,
q 0 ou 1,
x 2 à 10,
r > 1,
w 1 à 4
F un radical hydrocarboné linéaire ou ramifié,
R' un atome d'hydrogène ou un radical hydrocarboné monovalent ayant de 1 à 18 atomes de carbone,
Z un atome d'hydrogène ou un radical organique monovalent, notamment un alkyle, un ester alkylique ou un ester arylique.

6. Utilisation selon l'une quelconque des revendications 1 à 5 en tant que stabilisateur pour mousses dures de polyuréthanne et/ou de polyisocyanurate en concentrations de 0,01 à 20 %.

7. Utilisation selon l'une quelconque des revendications 1 à 6 pour améliorer la résistance aux flammes et/ou diminuer la conductibilité de la chaleur de mousses de polyuréthanne et/ou de polyisocyanurate.
